(19) Europäisches Patentamt
European Patent Office
Office européen des brevets

(11) Veröffentlichungsnummer: **0 373 440 A2**

# (12) EUROPÄISCHE PATENTANMELDUNG

(21) Anmeldenummer: **89122179.8**

(22) Anmeldetag: **01.12.89**

(51) Int. Cl.5: **C08L 63/00, C08L 81/06, C08G 59/50**

(30) Priorität: **16.12.88 DE 3842306**

(43) Veröffentlichungstag der Anmeldung: **20.06.90 Patentblatt 90/25**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Weber, Thomas, Dr.**
**Brüsseler Ring 4**
**D-6700 Ludwigshafen(DE)**
Erfinder: **Heckmann, Walter, Dr.**
**Geiersbergstrasse 2**
**D-6940 Weinheim(DE)**
Erfinder: **Mertes, Juergen, Dr.**
**Rheingoenheimer Strasse 57**
**D-6700 Ludwigshafen(DE)**
Erfinder: **Tesch, Helmut, Dr.**
**Im Schlittweg 9**
**D-6701 Roedersheim-Gronau(DE)**
Erfinder: **Altstaedt, Volker, Dr.**
**Marienbaderstrasse 2**
**D-6084 Gernsheim(DE)**
Erfinder: **Eberle, Wolfgang, Dr.**
**Am Hemel 20**
**D-6500 Mainz 1(DE)**
Erfinder: **Folda, Thomas, Dr.**
**Adenauerstrasse 8**
**D-6719 Neuleiningen(DE)**
Erfinder: **Stutz, Herbert, Dr.**
**Im Eichbaeumle 98**
**D-7500 Karlsruhe 1(DE)**
Erfinder: **Recker, Hans-Gert, Dr.**
**2 Clove Blossom**
**Irvine, CA 92714(US)**

## (54) Härtbare, zähmodifizierte Epoxidharze.

(57) Die Erfindung betrifft härtbare, zähmodifizierte Epoxidharz-Mischungen aus

A. einer aromatischen Epoxidverbindung,

B. einem Aminhärter,

C. 10 bis 40 Gew.% eines reaktive Gruppen enthaltenden aromatischen thermoplastischen Oligomeren, vorzugsweise eines Polyethersulfons, und

D. 0,1 bis 10 Gew.% eines hochmolekularen Emulgators, vorzugsweise eines Phenoxyharzes, eines Epoxidharzes oder eines thermoplastischen Copolymeren, welche sowohl mit der Epoxidverbindung A als auch mit dem Oligomeren C verträglich ist.

Die Epoxidharzmischungen eignen sich zur Herstellung von Hochleistungsverbundwerkstoffen.

EP 0 373 440 A2

## Härtbare, zähmodifizierte Epoxidharze

Die Erfindung betrifft härtbare, zähmodifizierte Epoxidharz-Mischungen, die zu hochtemperaturbeständigen Formteilen hoher Steifigkeit und Festigkeit gehärtet werden können.

Aus der EP-A 193 082 ist bekannt, daß die Zähigkeit von ausgehärteten Formteilen aus Epoxidharzen durch den Zusatz bestimmter oligomerer aromatischer thermoplastischer Polymerer erhöht werden kann. Im gehärteten Produkt liegen zwei diskrete glasartige Phasen vor, von denen eine mehr, die andere weniger Thermoplast enthält.

Arbeitet man die Beispiele der EP-A 193 082 nach und beobachtet die Epoxidharzmischung während des Härtungsvorgangs unter dem Mikroskop, so stellt man fest, daß eine oder mehrere Phasentrennungen auftreten. Dabei bilden sich diskrete Phasen (Inseln), die in Größe und Form nicht konstant bleiben, sondern sich ändern. Die im ausgehärteten Harz vorliegenden Inseln sind nicht einheitlich, sondern in Größe und Form verschiedenartig. Verändert man auch nur geringfügig die Art und die Mengenverhältnisse der Mischungskomponenten oder die Härtungsbedingungen, so erhält man eine starke Änderung von Form, Größe und Stabilität der diskreten Phase und des Zeitpunkts ihrer Bildung. Es liegen also thermodynamisch instabile Systeme vor.

Die Morphologie des ausgehärteten Harzes, d.h., die Netzwerkstrukturen der gebildeten Phasen beeinflussen sehr stark die mechanischen Eigenschaften der fertigen Formteile. Ausgehend von ein und derselben Epoxidharz-Zusammensetzung erhält man also je nach Härtungstemperatur und Heizzyklus unterschiedliche Netzwerkstrukturen. Unterschiedliche Netzwerkstrukturen haben aber unterschiedliche mechanische Eigenschaftswerte zur Folge. Da in der Praxis, vor allem bei der Herstellung dicker Formteile, die Härtungstemperaturen innerhalb eines härtenden Formteils schwanken und zudem von den Verarbeitern unterschiedliche Heizzyklen angewandt werden, wäre es wünschenswert, Epoxidharz-Mischungen zu entwickeln, die eine von der Härtungstemperatur und von der Art des Heizzyklus unabhängige Morphologie aufweisen, so daß beim Härten Formteile mit gleichmäßig guten mechanischen Eigenschaften erhalten und Produktschwankungen somit vermieden werden.

Diese Aufgabe wird erfindungsgemäß dadurch gelöst, daß man der Epoxidharzmischung 0,1 bis 10, vorzugsweise 0,3 bis 5 Gew.% eines hochmolekularen Emulgators zusetzt, der sowohl mit der Epoxidverbindung A als auch mit dem Polymeren C verträglich ist.

Dieser Emulgator wirkt als Phasenstabilisator und Phasenvermittler; er beeinflußt die Phasengrenzfläche, indem er die Phasengrenzflächenspannung herabsetzt und damit eine optimale Haftung der Phasen aneinander bewirkt. Man erhält damit ein thermodynamisch stabiles Zweiphasensystem, das gegen Schwankungen in der Harzzusammensetzung und in den Härtungbedingungen stabil ist. Darüberhinaus zeigt das ausgehärtete Harz Inseln einheitlicher Größe und Form. Gegenstand der Erfindung ist demzufolge eine härtbare, zähmodifizierte Epoxidharzmischung, enthaltend

A. eine aromatische, mindestens bifunktionelle Epoxidverbindung mit einem mittleren Molekulargewicht $M_n$ von weniger als 2000,

B. einen mindestens bifunktionellen Aminhärter,

C. 10 bis 40 Gew.% eines reaktive Gruppen enthaltenden, aromatischen thermoplastischen Polymeren mit einem mittleren Molekulargewicht (Zahlenmittel) oberhalb von 2 000 und einer Glasübergangstemperatur oberhalb von 120 °C, mit der Maßgabe, daß Epoxidgruppen und die aktiven Wasserstoffatome der Komponenten B und C im Verhältnis 0,8 : 1 bis 1,6 : 1 vorliegen, gekennzeichnet durch einen Gehalt von

D. 0,1 bis 10 Gew.% vorzugsweise 0,5 bis 5 Gew.-%, eines hochmolekularen Emulgators, der sowohl mit der Epoxidverbindung A als auch mit dem Polymeren C verträglich ist.

Zu den einzelnen Komponenten ist folgendes zu sagen:

A. Epoxidverbindungen sind niedermolekulare Verbindungen mit end- oder seitenständigen oder in cyclischen Systeme eingebauten Epoxidgruppen. Besonders geeignet sind Umsetzungsprodukte von mehrfach funktionellen Alkoholen, Phenolen, cycloaliphatischen Carbonsäuren, aromatischen Aminen oder Aminophenolen mit Epichlorhydrin, sowie cycloaliphatische Epoxide und cycloaliphatische Epoxidester. Es können auch Mischungen von verschiedenen Epoxidverbindungen zum Einsatz kommen. Bevorzugt sind Bisphenol-A-Diglycidylether, Bisphenol-F-Diglycidylether und Triglycidylether von Paraaminophenolen, sowie Mischungen dieser Epoxidverbindungen. Besonders günstige Ergebnisse werden mit der Epoxidverbindung der Formel I auf Basis von Dicyclopentadien nach US 3,535,734 erhalten. Weitere geeignete Epoxidverbindungen sind in der EP-A-193 082 aufgezählt. Die Epoxidverbindungen haben eine Glastemperatur von vorzugsweise unter 20 °C. Ihr mittleres Molekulargewicht liegt unter 2 000, vorzugsweise unter 1 500.

B. Bevorzugte Aminhärter sind aromatische Diamine, wie z.B. 4,4′-Diaminodiphenylsulfon, 3,3′-Diaminodiphenylsulfon, Diaminodiphenylketon und Diaminodiphenylether, aber auch Diamine mit vier Phenylenresten, wie sie z.B. in EP-A-126 494 beschrieben sind. Grundsätzlich sind auch andere übliche Epoxidhärter, wie Dicyandiamid und Bortrifluorid/Amin-Komplexe geeignet. Weitere Aminhärter sind in EP-A-193 082 beschrieben.

C. Das aromatische Polymere enthält funktionelle Endgruppen, welche mit den Epoxidgruppen der Epoxidverbindung reagieren können, z.B. Amin-, Hydroxy- oder Carboxylgruppen. Bevorzugt sind Polymere mit zwei Hydroxy- oder Amino-Endgruppen. Ihr mittleres Molekulargewicht liegt oberhalb von 2000, vorzugsweise zwischen 4 000 und 20 000; ihre Glastemperatur über 120 °C vorzugsweise zwischen 140 °C und 260 °C. Bevorzugt sind aminterminierte Polysulfone und Polyethersulfone, sowie entsprechende Copolymere. Weitere Einzelheiten, insbesondere über ihre Herstellung sind EP-A-193 082 zu entnehmen. Das aromatische Polymer ist in der erfindungsgemäßen Epoxidharzmischung in Mengen von 10 bis 40, vorzugswiese von 10 bis 25 Gew.% enthalten.

D. Der Emulgator D ist ein vorzugsweise lineares Polymeres mit einem mittleren Molekulargewicht $M_n$ von mehr als 4 000, das entweder

a. in beiden Komponenten A und C löslich ist, oder

b. nur in einer Komponente A oder C löslich ist und mit der anderen Komponente unter Härtungsbedingungen chemisch oder physikalisch in Form von Dipol-Wechselwirkungen zu reagieren vermag.

Bevorzugte Emulgatoren sind Phenoxyharze der Formel II

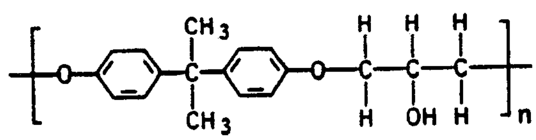

(II)

wobei n zwischen 50 und 150 liegt. Sie werden von der Firma Union Carbide Corp. unter der Bezeichnung UCAR vertrieben.

Weitere geeignete Emulgatoren sind Epoxidharze mit einem mittleren Molekulargewicht von vorzugsweise größer als 5 000, z.B. Epikote 1009 der Firma Shell Oil Comp. und DER 669 der Firma Dow Chemical Comp. Schließlich sind auch statistische Copolymere und Blockcopolymere geeignet, die aus den gleichen Einheiten wie das Polymere C aufgebaut sind, z.B. Copolymere aus

Polysulfon/Polyethersulfon,
Polyethersulfon/Polyetherketon,
Polysulfon/Polyetherketon,
Polyethersulfon/Polyamid,
Polysulfon/Polyamid,
Polyethersulfon/Polyimid,
Polysulfon/Polyimid.

Im Unterschied zu den Polymeren C weisen thermoplastische Polymere D keine reaktiven Endgruppen auf. In der Epoxidharzmischung beträgt das Verhältnis Epoxidgruppen zu aktiven Wasserstoffatomen der Komponente B und C 0,8 : 1 bis 1,6 : 1, vorzugsweise 0,9 : 1 bis 1,4 : 1.

Die Epoxidharzmischung kann ferner die üblichen Zusatzstoffe, wie Katalysatoren, z.B. Phosphine, Elastifiziermittel, wie Butadien/Acrylnitrilkautschuke enthalten.

Zur Herstellung der erfindungsgemäßen Epoxidharz-Mischungen kann man die flüssige Komponenten unter Rühren zusammengeben, bzw. eine feste Komponente in der flüssigen lösen. Bevorzugt wird man aber zunächst die Epoxidverbindung A, das reaktive Gruppen tragende Polymere C zusammen mit dem Emulgator D zur Vorreaktion bringen, wobei gegebenenfalls zunächst nur ein äquivalenter Anteil Epoxidverbindung eingesetzt wird. Diese Vorreaktion wird vorzugsweise zwischen 80 und 140 °C durchgeführt und dauert im allgemeinen 30 bis 360 min. Dann wird der Härter B und gegebenenfalls die restliche Epoxidverbindung A sowie ein Härtungskatalysator zugegeben und die Härtungsreaktion eingeleitet, die bei Temperaturen zwischen 100 und 240 °C abläuft.

Das ausgehärtete Produkt zeigt bei mikroskopischer Betrachtung deutlich zwei getrennte Phasen, wobei die kohärente Phase wahrscheinlich mehr Polymer C und die disperse Phase weniger Polymer C enthält. Die Inseln der dispersen Phase weisen praktisch gleichmäßige Größe und Form auf.

Der Gehalt an disperer Phase beträgt im allgemeinen 30 bis 70 Vol.%, die Größe der dispergierten Domänen liegt zwischen 0,1 und 10 µm. Die ausgehärteten erfindungsgemäßen Produkte zeichnen sich durch extrem hohe Werte für Bruchenergie $G_{IC}$ und Spannungsintensitätsfaktor $K_{IC}$ aus. Die Bedeutung und

Meßmethoden zur Bestimmung dieser Werte sind ausführlich in EP-A-193 082 beschrieben, wo auch weitere Literatur hierzu angegeben ist. Die $K_{IC}$-Werte liegen im allgemeinen oberhalb von 1,2 [MPa•$m^{1/2}$], vorzugsweise oberhalb von 1,4 [MPa•$m^{1/2}$].

Die erfindungsgemäßen Epoxidharz-Mischungen eignen sich zur Herstellung von temperaturbeständigen Formteilen mit hoher Steifigkeit, Zähigkeit und Dimensionsstabilität, z.B. für Teile, die in Luft- und Raumfahrt Anwendung finden, für Strukturklebstoffe und für gedruckte Schaltungen.

Besonders geeignet sind die Epoxidharz-Mischungen zur Herstellung von Hochleistungsverbundwerkstoffen. Diese enthalten im allgemeinen 30 bis 70 Vol.% Verstärkungsfasern, vorzugsweise aus Kohlenstoff, Glas oder aromatischem Polyamid, beispielsweise in Form von Gewebe, parallelen Fasergelegen oder Einzel-Rovings. Zur Herstellung dieser Verbundwerkstoffe tränkt man die Fasern mit der gegebenenfalls vorerhitzten Epoxidharz-Mischung und führt dann, gegebenenfalls nach Verformen des Prepregs, die Härtung durch.

Die in Beispielen genannten Teile beziehen sich auf das Gewicht.

Beispiel 1

46 Teile des Triglycidethers von Paraaminophenol wurden bei 120° C mit 0,004 Teilen Triphenylphosphin, 25 Teilen eines OH-terminierten Polysulfons ($M_n$ = 11.000) und 1,5 Teilen eines Phenoxyharzes der Formel II (mit einem Polymerisationsgrad von etwa 100) versetzt und 2 Stunden gerührt. Dann wurden 29 Teile 4,4-Diaminodiphenylsulfon zugegeben und die Mischung wurde 2 h bei 177° C und weitere 2 h bei 200° C gehärtet. An dem Produkt wurde ein $K_{1c}$wert von 1,4 [MPa•$m^{1/2}$] gemessen.

Beispiele 2 - 5

17,3 Teile des Triglycidethers von Paraaminophenol und 17,3 Teile des Diglycidethers von 4,4′-Dihydroxydiphenylmethan wurden bei 120° C mit 0,004 Teilen Triphenylphosphin, 16,8 Teilen eines OH-terminierten Polysulfons (unterschiedlichen Molekulargewichts) und wechselnden Mengen eines Phenoxyharzes der Formel II (Polymerisationsgrad etwa 100) versetzt und 2 Stunden gerührt. Dann wurden 17,3 Teile des Polyglycidethers der Formel I (mittlerer Polymerisationsgrad etwa 1,4) und 30,1 Teile 4,4′-Diaminodiphenylsulfon zugegeben und die Mischung wurde 2 h bei 177° C und weitere 2 h bei 200° C gehärtet.

Ergebnisse siehe Tabelle.

In einem Vergleichsversuch V wurde eine nicht ausreichende Menge Emulgator zugesetzt.

Tabelle

| Beispiel | $M_n$ des Polysulfons | Teile Emulgator | Morphologie | $K_{Ic}$ [MPa•$m^{1/2}$] |
|---|---|---|---|---|
| 2 | 11 000 | 1,7 | stabilisiert | 1,45 |
| 3 | 11 000 | 1,3 | stabilisiert | 1,47 |
| 4 | 11 000 | 1,3 | stabilisiert | 1,66 |
| 5 | 14 000 | 1,0 | stabilisiert | 1,68 |
| V | 14 000 | 0,4 | nicht stabilisiert | 1,65 |

Beim Vergleichsversuch V wurde durch mikroskopische Betrachtung festgestellt, daß während des Härtungszyklus mehr als eine Phasentrennung auftritt, während bei den erfindungsgemäßen Beispielen nur eine Phasentrennung gegen Ende des Hä tungszyklus zu beobachten ist.

**Ansprüche**

1. Härtbare, zähmodifizierte Epoxidharzmischung, enthaltend
A. eine aromatische, mindestens bifunktionelle Epoxidverbindung mit einem mittleren Molekulargewicht $M_n$ von weniger als 2 000,
B. einen mindestens bifunktionellen Aminhärter,
C. 10 bis 40 Gew.% eines reaktive Gruppen enthaltenden, aromatischen thermoplastischen Polymeren mit einem mittleren Molekulargewicht (Zahlenmittel) oberhalb von 2 000 und einer Glasübergangstemperatur oberhalb von 120° C,
mit der Maßgabe, daß Epoxidgruppen und die aktiven Wasserstoffatome der Komponenten B und C im Verhältnis 0,8 : 1 bis 1,6 : 1 vorliegen, gekennzeichnet durch einen Gehalt von
D. 0,1 bis 10 Gew.% eines hochmolekularen Emulgators, der sowohl mit dem der Epoxidverbindung A als auch mit dem Polymeren C verträglich ist.

2. Härtbare Epoxidharzmischung nach Anspruch 1, dadurch gekennzeichnet, daß der Emulgator D ein lineares Polymeres mit einem mittleren Molekulargewicht $M_n$ von mehr als 4 000 ist, das entweder
a. in beiden Komponenten A und C löslich ist, oder
b. nur in einer Komponente A oder C löslich ist und mit der anderen Komponente unter Härtungsbedingungen chemisch oder physikalisch in Form von Dipol-Wechselwirkungen zu reagieren vermag.

3. Härtbare Epoxidharzmischung nach Anspruch 1, dadurch gekennzeichnet, daß der Emulgator D aus folgenden Polymeren ausgewählt ist:
a. einem Phenoxyharz,
b. einem Epoxidharz mit einem mittleren Molekulargewicht $M_n$ von mehr als 5 000,
c. einem statistischen oder Blockcopolymeren auf Basis von Einheiten, aus denen das Polymere C aufgebaut ist.

4. Epoxidharzmischung nach Anspruch 1, dadurch gekennzeichnet, daß die Komponente A aus folgenden Verbindungen ausgewählt ist:
a.

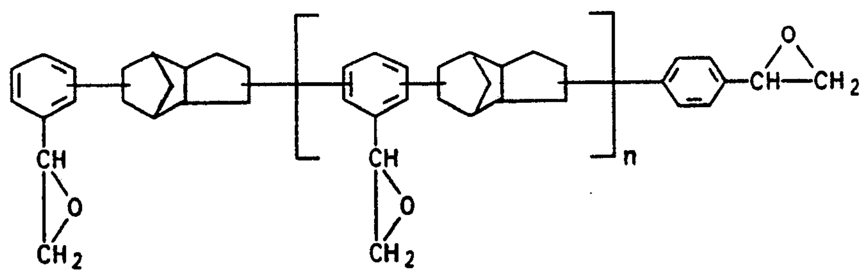

(I)

wobei n im Mittel zwischen 0 und 3 liegt.
b. einem Diglycidylether eines Biphenols,
c. einem Triglycidylether von Paraaminophenol

5. Epoxidharzmischung nach Anspruch 1, dadurch gekennzeichnet, daß die Komponente B mindestens teilweise aus 4,4′-Diaminodiphenylsulfon oder 3,3′-Diaminodiphenylsulfon besteht.

6. Epoxidharzmischung nach Anspruch 1, dadurch gekennzeichnet, daß die Komponente C ein amin- oder hydroxylterminiertes Polysulfon oder Polyethersulfon ist.

7. Hochleistungsverbundwerkstoffe, enthaltend das Härtungsprodukt der Epoxidharz-Mischung nach Anspruch 1 und 30 bis 70 Vol.% Verstärkungsfasern.